# EUROPÄISCHE PATENTSCHRIFT

(11) **EP 0 680 807 B1**
(45) Veröffentlichungstag und Bekanntmachung des Hinweises auf die Patenterteilung: **29.09.1999**
(21) Anmeldenummer: 95810182.6
(22) Anmeldetag: 17.03.1995
(51) Int. Cl.: B25D 11/12, B25D 16/00, B25D 17/24

(54) **Bohr- und Meisselgerät**
Drilling and chiseling tool
Outil pour forer et ciseler

(30) Priorität: 02.05.1994 DE 4415348
(43) Veröffentlichungstag der Anmeldung: 08.11.1995
(73) Patentinhaber: HILTI Aktiengesellschaft, 9494 Schaan (LI)
(72) Erfinder: Manschitz, Erwin, D-82110 Germering (AT); Selb, Michael, A-6800 Feldkirch (AT); Schinkitz, Dirk, A-6713 Ludesch (AT)
(74) Vertreter: Wildi, Roland

(56) Entgegenhaltungen:
- EP-A- 0 042 010
- DE-A- 3 405 922
- FR-A- 2 280 480
- GB-A- 2 136 722

## Beschreibung

Die Erfindung betrifft ein Bohr- und/oder Meisselgerät mit einem Gehäuse, einem Schlagwerk mit Erregerkolben und wenigstens einer Kurbelwelle, einem gehäusefesten Antriebsmotor mit Antriebswelle und einem Getriebe zwischen dem Schlagwerk und dem Antriebsmotor, wobei das Schlagwerk unter Abstützung an Dämpfelementen gegenüber dem Gehäuse parallel zur Schlagrichtung des Schlagwerkes versetzbar angeordnet ist.

Aus der DE-PS 34 05 922 ist ein Bohr- und/oder Meisselgerät mit Antriebsmotor, Schlagwerk und Getriebe bekannt, bei dem das Schlagwerk eine gegenüber dem Gehäuse schwingungsmässig abgekoppelte Masse bildet, die parallel zur Schlagrichtung des Schlagwerkes versetzbar im Gehäuse gelagert und über Dämpfungselemente am Gehäuse abgestützt ist. Auf diese Weise werden durch Rückimpulse der Werkzeuge hervorgerufene Stösse und Vibrationen gedämpft auf das Gehäuse und auf den mit dem Gehäuse fest verbundenen Handgriff übertragen.

Der im Gehäuse fest angeordnete Antriebsmotor bildet zusammen mit dem Gehäuse eine Restmasse, die der Beschleunigung der schwingenden Masse entgegenwirkt. Der Antrieb des Schlagwerkes erfolgt vom Antriebsmotor, dessen Antriebswelle rechtwinklig zur Schlagrichtung des Schlagwerkes angeordnet ist. Bei der durch die Dämpfungselemente ermöglichten Versetzung des Schlagwerkes erfolgt eine entsprechende Versetzung der Kurbelwelle gegenüber der Antriebswelle des fest im Gehäuse angeordneten Antriebsmotors. Die Kurbelwelle ragt dabei mit einem verzahnten Bereich in ein innenverzahntes Ritzel des Getriebes und ist in diesem drehfest axial begrenzt versetzbar.

Dieses bekannte Bohr- und/oder Meisselgerät weist den Nachteil auf, dass der verzahnte Bereich der Kurbelwelle und die Verzahnung des Ritzels aufgrund der dauernden Reibung bei der axialen Versetzung schnell verschleissen.

Der Erfindung liegt die Aufgabe zugrunde, ein Bohr- und/oder Meisselgerät zu schaffen, bei dem die Übertragung der Drehbewegung vom Antriebsmotor auf das versetzbare Schlagwerk verschleissfrei erfolgt.

Erfindungsgemäss wird dies dadurch erreicht, dass die Rotationsachse der Kurbelwelle des Schlagwerkes im wesentlichen rechtwinklig zur Schlagrichtung des Schlagwerkes verläuft und dass zwischen dem Antriebsmotor und dem Schlagwerk ein parallel zur Schlagrichtung des Schlagwerkes wirkendes Achsversatz-Ausgleichselement angeordnet ist.

Bei einer Versetzung der Kurbelwelle während eines Bearbeitungsvorganges gegenüber der Antriebswelle des Antriebsmotors parallel zur Schlagrichtung des Schlagwerkes wird mit Hilfe des erfindungsgemässen Achsversatz-Ausgleichselementes die Drehbewegung bzw. das Drehmoment des Antriebsmotors verschleissfrei auf die Kurbelwelle des Schlagwerkes übertragen. Der Antriebsmotor kann so angeordnet sein, dass die Antriebswelle gegenüber der Kurbelwelle des sich in Ruhestellung befindlichen Schlagwerkes im wesentlichen koaxial verläuft.

Um eine bestimmte Drehzahl an der Kurbelwelle zu erreichen, die sich unterscheidet von der Drehzahl der Antriebswelle des Antriebsmotors, ist es notwendig, zwischen dem Schlagwerk und dem Antriebsmotor ein Getriebe anzuordnen. Das Getriebe kann dabei vorzugsweise zwischen dem Antriebsmotor und dem Achsversatz-Ausgleichselement angeordnet sein. Dabei kann das Gehäuse Lagerstellen für das Getriebe aufweisen, das somit fest innerhalb des Gehäuses des Bohr- und/oder Meisselgerätes angeordnet ist. Der Antriebsmotor kann dabei so angeordnet sein, dass die Antriebswelle gegenüber der Kurbelwelle des sich in Ruhestellung befindlichen Schlagwerkes versetzt angeordnet ist.

Zur Übertragung der Drehbewegung von der Antriebswelle des Antriebsmotors auf die Kurbelwelle des Schlagwerkes dient ein Achsversatz-Ausgleichselement, das vorteilhafterweise als Balligzahn-Kupplung ausgebildet ist. Dieses aus wenigen Teilen bestehende Achsversatz-Ausgleichselement ist wirtschaftlich herstellbar. Bei der erfindungsgemässen Balligzahn-Kupplung weist vorzugsweise die Kurbelwelle des Schlagwerks eine Aussenverzahnung auf, die mit einer Innenverzahnung einer Kupplungswelle zusammenwirkt, wobei die Zähne der Aussenverzahnung ballig und bogenförmig ausgebildet sind und die Zähne der Innenverzahnung eine entsprechende Gegenform aufweisen.

Im Bereich des Getriebes weist zweckmässigerweise ein Ritzel des Getriebes eine mit der Antriebswelle des Antriebsmotors zusammenwirkende Aussenverzahnung und eine mit einer Aussenverzahnung der Kupplungswelle zusammenwirkende Innenverzahnung auf, wobei die Zähne der an der Kupplungswelle angeordneten Aussenverzahnung ballig und bogenförmig ausgebildet sind und die Zähne der Innenverzahnung eine entsprechende Gegenform aufweisen. Dadurch wird eine allseitige Winkelbeweglichkeit der Kupplungswelle erreicht.

Beim parallelen Verschieben der Kurbelwelle gegenüber der Antriebswelle des Antriebsmotors bzw. gegenüber dem Ritzel des Getriebes entsteht eine Abstandsänderung zwischen der Kurbelwelle und der Antriebswelle bzw. dem Ritzel. Diese Abstandsänderung wird ausgeglichen durch eine gewölbte Vertiefung an einem Boden der Innenverzahnung und durch eine entsprechende gewölbte Erhebung am freien Endbereich der die Aussenverzahnung aufweisende Kupplungswelle. Das axiale Spiel der Kupplungswelle ist somit in jeder Winkellage gleich.

Um eine wartungsfreie, gegen Öl und Chemikalien beständige Kupplung von geringem Trägheitsmoment und Gewicht zu schaffen, ist die Kupplungswelle vorzugsweise aus Kunststoff ausgebildet.

Das Achsversatz-Ausgleichselement ist vorzugsweise als Kreuzscheibenkupplung ausgebildet. Bei dieser Kreuzscheiben-Kupplung, auch Oldham-Ausgleichskupplung genannt, wirken einfache, wirtschaftlich herstellbare Teile zusammen. Die Kurbelwelle des Schlagwerks und ein Ritzel des Getriebes stehen dabei jeweils mit einer Nabe in Verbindung, wobei die Naben Schlitze aufweisen, in die zueinander versetzt angeordnete Nocken einer Zwischenscheibe ragen.

Das Achsversatz-Ausgleichselement ist vorteilhafterweise als Parallelkurbel-Kupplung ausgebildet. Bei dieser Parallelkurbel-Kupplung, auch Schmidt-Kupplung genannt, steht zweckmässigerweise ein am Gehäuse fest angeordnetes, drehbares Ritzel des Getriebes fest mit einer Scheibe und die Kurbelwelle fest mit einer Lagerscheibe in Verbindung. Zwischen der Scheibe und der Lagerscheibe befindet sich eine Zwischenscheibe. Die Scheibe, die Zwischenscheibe und die Lagerscheibe sind untereinander über Bolzen mit gleich langen Lenkern so verbunden, dass zwei hintereinander angeordnete Parallelkurbel-Getriebe entstehen und die Drehbewegung winkelgetreu übertragen wird.

Die Erfindung wird anhand von Zeichnungen, die drei Ausführungsbeispiele wiedergeben, näher erläutert. Es zeigt:
- Fig. 1: ein erfindungsgemässes, schematisch dargestelltes Bohr- und/oder Meisselgerät;
- Fig. 2: ein Bohr- und/oder Meisselgerät mit Kreuzscheiben-Kupplung;
- Fig. 3: ein Bohr- und/oder Meisselgerät mit Balligzahn-Kupplung;
- Fig. 4: ein Bohr- und/oder Meisselgerät mit Parallelkurbel-Kupplung.

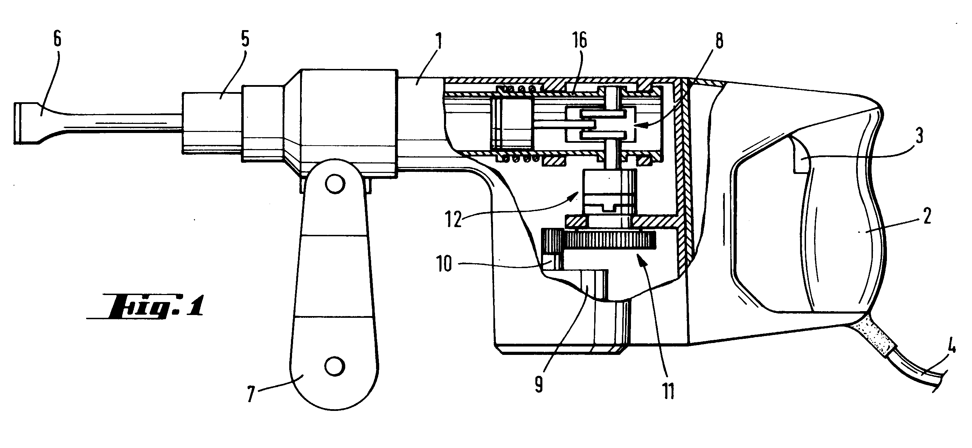

Das in Fig. 1 dargestellte Bohr- und/oder Meisselgerät besteht im wesentlichen aus einem Gehäuse 1, einem Handgriff 2, einem im Bereich des Handgriffes 2 angeordneten Betätigungsschalter 3 zum Steuern des Bohr- und/oder Meisselgerätes, einem elektrischen Verbindungskabel 4 für die elektrische Stromversorgung, einem Werkzeughalter 5 zur Aufnahme eines Werkzeuges 6 und einem Zusatzgriff 7. Im Innern des Gehäuse 1 ist ein zylindrisches Führungsrohr 16 in Verbindung mit einem Schlagwerk 8 schematisch dargestellt. Das Schlagwerk 8 wird angetrieben von einem ebenfalls schematisch dargestellten Antriebsmotor 9 mit der Antriebswelle 10, die über ein Getriebe 11 und ein Achsversatz-Ausgleichselement 12 das Schlagwerk 8 in Bewegung versetzt.

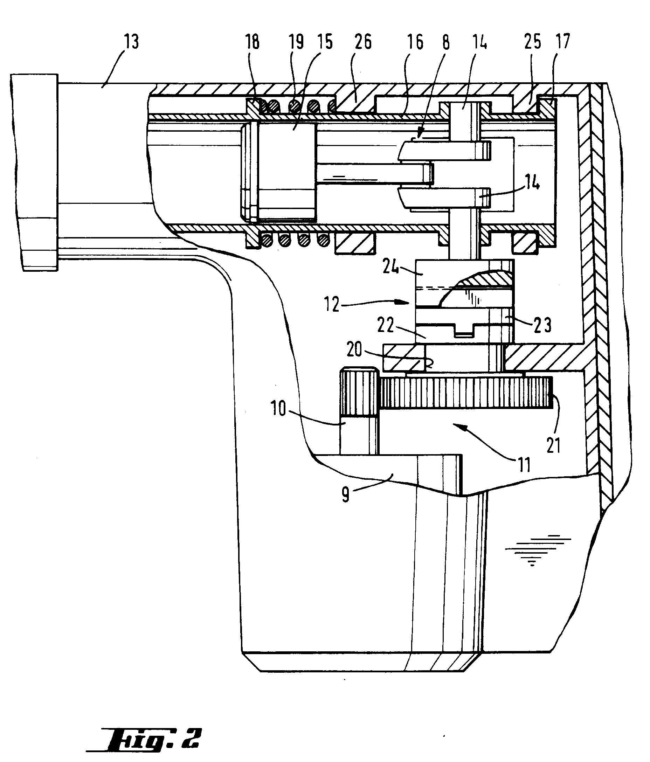

In den Figuren 2, 3 und 4 ist das Innere von drei verschiedenen Bohr-und/oder Meisselgeräten vergrössert dargestellt. Alle drei Geräte besitzen ein im wesentlichen zylindrisch ausgebildetes Führungsrohr 16, 36, 56 mit radialen Vorsprüngen 17, 18, 37, 38, 57, 58. Das Führungsrohr 16, 36, 56 ist entlang von Gehäuseführungen 25, 26, 47, 48, 67, 68 axial versetzbar angeordnet. Über eine aussen am Führungsrohr 16, 36, 56 angeordnete Feder 19, 39, 59, die zwischen der Gehäuseführung 26, 48, 68 des Gehäuses 13, 30, 50 und dem Vorsprung 18, 38, 58 des Führungsrohres 16, 36, 56 angeordnet ist, wird der Vorsprung 17, 37, 57 an einen stirnseitigen Bereich der Gehäuseführung 25, 47, 67 des Gehäuses 13, 30, 50 gedrückt.

Am Führungsrohr 16, 36, 56 ist eine zweiteilige Kurbelwelle 14, 34, 54 angeordnet, deren Rotationsachse rechtwinklig zur Mittellängsachse des Führungsrohres 16, 36, 56 verläuft. Die Kurbelwelle 14, 34, 54 lagert in entsprechenden Durchtrittsöffnungen des Führungsrohres 16, 36, 56. An der Kurbelwelle 14, 34, 54 befindet sich ein an einem Pleuel aufgehängter Erregerkolben 15, 35, 55, der innerhalb des Führungsrohres 16, 36, 56 versetzbar ist. Eine Abdichtung des Erregerkolbens 15, 35, 55 gegenüber der Innenwandung des Führungsrohres 16, 36, 56 erfolgt über einen am Umfang des Erregerkolbens 15, 35, 55 angeordneten Dichtungsring in Form eines O-Ringes.

Das Schlagwerk 8, 28, 69, das sich im wesentlichen aus der Kurbelwelle 14, 34, 54, einem nicht dargestellten Schlagkolben und einem mit einem Pleuel verbundenen Erregerkolben 15, 35, 55 zusammensetzt, ist antreibbar von dem Antriebsmotor 9, 31, 51 mit Antriebswelle 10, 32, 52. Die Rotationsachse der Antriebswelle 10, 32, 52 verläuft im wesentlichen rechtwinklig zur Mittellängsachse des Führungsrohres 16, 36, 56. Der Antriebsmotor 9, 31, 51 ist fest mit dem Gehäuse 13, 30, 50 verbunden. Die Antriebswelle 10, 32, 52 weist eine Verzahnung auf und bildet ein Teil eines Getriebes 11, 29, 49, das ebenfalls fest mit dem Gehäuse 13, 30, 50 angeordnet ist. Ein Ritzel 21, 41, 61 bildet ein weiteres Teil des Getriebes 11, 29, 49.

Bei der Betätigung des Schlagwerkes 8, 28, 69 erfolgt eine axiale Versetzung des Erregerkolbens 15, 35, 55 und des Schlagkolbens, wobei vom Schlagkolben entsprechende Schlagimpulse auf ein nicht dargestelltes Werkzeug abgegeben werden. Beim Zurückfliegen des Werkzeuges erfolgt ein Impuls, der entgegen der Schlagrichtung wirkt und eine geringe axiale Versetzung des Führungsrohres 16, 36, 56 entgegen der Schlagrichtung verursacht. Die axiale Versetzung des Führungsrohres 16, 36, 56 kann auch durch Vibrationen erfolgen, die von einer Massenunwucht der Kurbelwelle 14, 34, 54 und von der Gaskraft aus dem Schlagwerk 8, 28, 69 erzeugt werden. Die Kurbelwelle 14, 34, 54 muss daher getrennt von oder an dem Führungsrohr 16, 36, 56 dämpfend gelagert sein. Diese axiale Versetzung wird in den dargestellten Ausführungsbeispielen federnd aufgefangen mit Hilfe von Dämpfelementen in Form von Federn 19, 39, 59, die zwischen einer Gehäuseführung 26, 48, 68 des Gehäuses 13, 30, 50 und dem Vorsprung 18, 38, 58 des Führungsrohres 16, 36, 56 angeordnet sind. Durch die axiale Versetzung des Führungsrohres 16, 36, 56 ergibt sich auch eine axiale Versetzung der Kurbelwelle 14, 34, 54 des Schlagwerkes 8, 28, 69. Es findet somit ein Achsversatz der Kurbelwelle 14, 34, 54 gegenüber einem Ritzel 21, 41 61 des Getriebes statt. Zum Ausgleich dieses Achsversatzes ist zwischen der Kurbelwelle 14, 34, 54 und dem Ritzel 21, 41, 61 des Getriebes 11, 29, 49 ein Achsversatz-Ausgleichselement 12, 33, 53 angeordnet.

Das in Fig. 2 dargestellte Achsversatz-Ausgleichselement 12 besteht aus einer Kreuzscheiben-Kupplung, auch Oldham-Ausgleichskupplung genannt. Die Kurbelwelle 14 und das Ritzel 21 des Getriebes 11 stehen jeweils mit einer Nabe 22, 24 in Verbindung, die einen Schlitz aufweist. In die Schlitze greifen 90° versetzt zueinander angeordnete Nocken einer Zwischenscheibe 23 ein. Die mit dem Ritzel 21 in Verbindung stehende Nabe 22 wird über eine entsprechende Lagerstelle 20 am Gehäuse 13 ortsfest geführt. Bei einem axialen Versatz des Führungsrohres 16 erfolgt ein axialer Versatz der Nabe 24 gegenüber der feststehenden Nabe 22.

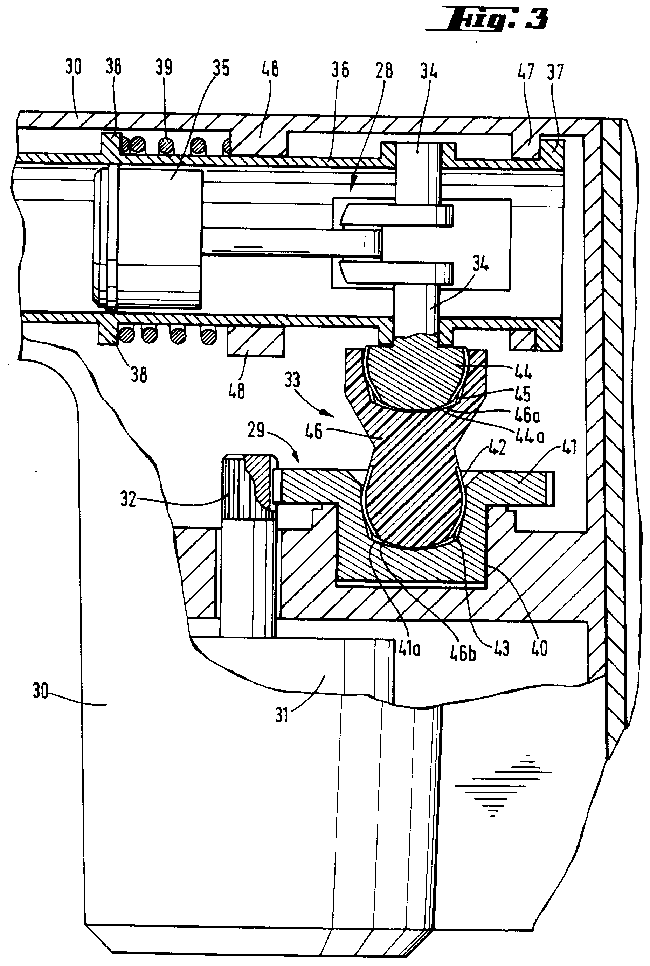

Das in Fig. 3 dargestellte Achsversatz-Ausgleichselement 33 besteht aus einer Ballig-Zahnkupplung, bei der die Kurbelwelle 34 mit einer Nabe 44 mit Aussenverzahnung in Verbindung steht, die in eine Kupplungswelle 46 mit Innenverzahnung 45 greift. Ein Ritzel 41 des Getriebes 29 ist topfförmig ausgebildet und weist eine Innenverzahnung 43 sowie eine mit der Antriebswelle 32 des Antriebsmotors 31 zusammenwirkende Aussenverzahnung auf. In diese Innenverzahnung 43 greift die der Drehmomentübertragung dienende Kupplungswelle 46 mit einer entsprechenden Aussenverzahnung 42. Sowohl die Aussenverzahnung 42 an der Kupplungswelle 46 als auch die Aussenverzahnung an der Kurbelwelle 34 besitzen bogenförmig und ballig ausgebildete Zähne, so dass eine allseitige Winkelbeweglichkeit der Kupplungswelle 46 erreicht wird. Die Innenverzahnung 45 der Kupplungswelle 46 und die Innenverzahnung 43 des Ritzels 41 weisen eine Verzahnung mit entsprechender Gegenform auf. Der Boden 41a des Ritzels 41 und der Boden 46a der Kupplungswelle 46 weisen eine gewölbte Vertiefung auf. Der freie Endbereich 46b der die Aussenverzahnung 42 tragenden Kupplungswelle 46 und der freie Endbereich 44a, der mit einer Aussenverzahnung versehenen, mit der Kurbelwelle 34 in Verbindung stehenden Nabe 44 weisen eine gewölbte Erhebung auf. Der Radius der gewölbten Vertiefung ist grösser als der Radius der gewölbten Erhebung. Das topfförmig ausgebildete Ritzel 41 ist ortsfest drehbar in einer Lagerstelle 40 des Gehäuses 30.

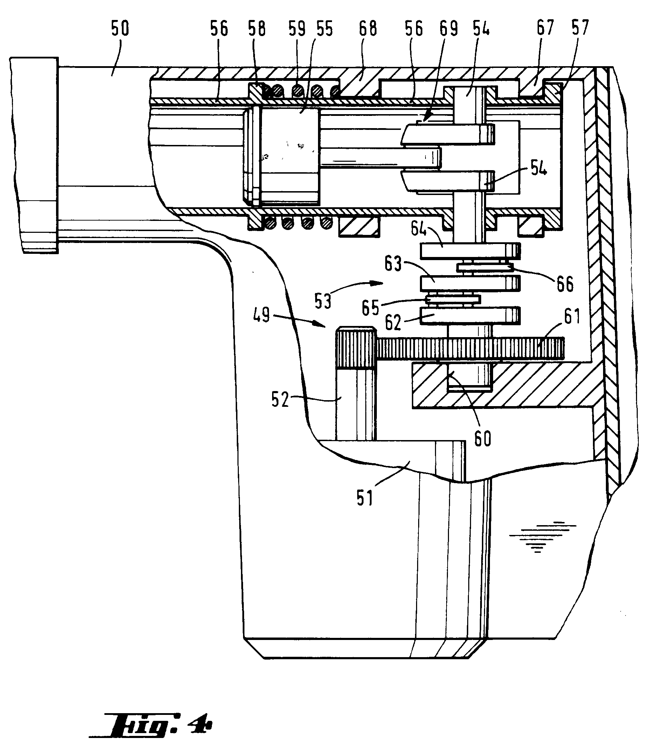

Das in Fig. 4 dargestellte Achsversatz-Ausgleichselement 53 ist eine Parallelkurbel-Kupplung, auch Schmidt-Kupplung genannt. Die Parallelkurbel-Kupplung besteht aus einer an der Antriebswelle 52 bzw. an dem Ritzel 61 drehfest angeordneten Scheibe 62 der der Zwischenscheibe 63 und der radial bzw. parallel zur Mittellängsachse der Antriebswelle versetzbaren Lagerscheibe 64. Die Scheiben sind untereinander über nicht dargestellte Bolzen mit gleich langen Lenkern 65, 66 so verbunden, dass zwei hintereinander angeordnete Parallelkurbel-Getriebe entstehen und die Drehbewegung winkelgetreu übertragen wird. Das Ritzel 61, das ein Teil eines Getriebes darstellt, ist mit einer zapfenartigen Verlängerung in einer entsprechenden Lagerstelle 60 des Gehäuses 50 ortsfest drehbar.

## Patentansprüche

1. Bohr- und/oder Meisselgerät mit einem Gehäuse (13, 30, 50), einem Schlagwerk (8, 28, 69) mit Erregerkolben (15, 35, 55) und wenigstens einteiliger Kurbelwelle (14, 34, 54), einem gehäusefesten Antriebsmotor (9, 31, 51) mit Antriebswelle (10, 32, 52) und einem Getriebe (11, 29, 49) zwischen dem Schlagwerk (8, 28, 69) und dem Antriebsmotor (9, 31, 52), wobei das Schlagwerk (8, 28, 69) unter Abstützung an Dämpfelementen gegenüber dem Gehäuse (13, 30, 50) parallel zur Schlagrichtung des Schlagwerkes (8, 28., 69) versetzbar angeordnet ist, **dadurch gekennzeichnet,** dass die Rotationsachse der Kurbelwelle (14, 34, 54) des Schlagwerkes (8, 28, 69) im wesentlichen rechtwinklig zur Schlagrichtung des Schlagwerkes (8, 28, 69) verläuft und dass zwischen dem Antriebsmotor (9, 31, 51) und dem Schlagwerk (8, 28, 69) ein parallel zur Schlagrichtung des Schlagwerkes (8, 28, 69) wirkendes Achsversatz-Ausgleichselement (12, 33, 53) angeordnet ist.

2. Bohr- und/oder Meisselgerät nach Anspruch 1, dadurch gekennzeichnet, dass das Getriebe (11, 29, 49) zwischen dem Antriebsmotor (9, 31, 51) und dem Achsversatz-Ausgleichselement (12, 33, 53) angeordnet ist.

3. Bohr- und/oder Meisselgerät nach Anspruch 1 oder 2, dadurch gekennzeichnet, dass das Achsversatz-Ausgleichselement (33) als Balligzahn-Kupplung ausgebildet ist.

4. Bohr- und/oder Meisselgerät nach Anspruch 3, dadurch gekennzeichnet, dass die Kurbelwelle (34) des Schlagwerks (28) eine Aussenverzahnung aufweist, die mit einer Innenverzahnung (45) einer Kupplungswelle (46) zusammenwirkt, wobei die Zähne der Aussenverzahnung ballig und bogenförmig ausgebildet sind und die Zähne der Innenverzahnung (45) eine entsprechende Gegenform aufweisen.

5. Bohr- und/oder Meisselgerät nach Anspruch 3 oder 4, dadurch gekennzeichnet, dass ein Ritzel (41) des Getriebes (29) eine mit der Antriebswelle (32) des Antriebsmotors (31) zusammenwirkende Aussenverzahnung und eine mit einer Aussenverzahnung (42) der Kupplungswelle (46) zusammenwirkende Innenverzahnung (43) aufweist, wobei die Zähne der Aussenverzahnung (42) ballig und bogenförmig ausgebildet sind und die Zähne der Innenverzahnung (43) eine entsprechende Gegenform aufweisen.

6. Bohr- und/oder Meisselgerät nach Anspruch 5 oder 6, dadurch gekennzeichnet, dass die Kupplungswelle (46) aus Kunststoff ausgebildet ist.

7. Bohr- und/oder Meisselgerät nach Anspruch 1 oder 2, dadurch gekennzeichnet, dass das Achsversatz-Ausgleichselement (12) als Kreuzscheiben-Kupplung ausgebildet ist.

8. Bohr- und/oder Meisselgerät nach Anspruch 7, dadurch gekennzeichnet, dass die Kurbelwelle (14) und ein Ritzel (21) des Getriebes (11) mit jeweils einer Nabe (22, 24) in Verbindung stehen, wobei die Naben (22, 24) Schlitze aufweisen, in die zueinander versetzt angeordnete Nocken einer Zwischenscheibe (23) ragen.

9. Bohr- und/oder Meisselgerät nach Anspruch 1 oder 2, dadurch gekennzeichnet, dass das Achsversatz-Ausgleichselement (53) als Parallelkurbel-Kupplung ausgebildet ist.

10. Bohr- und/oder Meisselgerät nach Anspruch 9, dadurch gekennzeichnet, dass ein am Gehäuse fest angeordnetes, drehbares Ritzel (61) des Getriebes (49) fest mit einer Scheibe (62) und die Kurbelwelle (54) fest mit einer Lagerscheibe (64) in Verbindung steht, wobei die Lagerscheiben (62, 64) über Lenker (65, 66) mit einer zwischen beiden Lagerscheiben (62, 64) angeordneten Zwischenscheibe verbunden sind.

## Claims

1. Power drill and/or chisel, having a housing (13, 30, 50), a percussion mechanism (8, 28, 69) with an exciter piston (15, 35, 55) and at least one-piece crankshaft (14, 34, 54), a driving motor (9, 31, 51) fixed to the housing and having a drive shaft (10, 32, 52) and a gear mechanism (11, 29, 59) between the percussion mechanism (8, 28, 69) and the driving motor (9, 31, 51), the percussion mechanism (8, 28, 69) resting on damping elements in relation to the housing (13, 30, 50) and being arranged so as to be displaceable parallel to the percussive direction of the percussion mechanism (8, 28, 69), characterised in that the rotational axis of the crankshaft (14, 34, 54) of the percussion mechanism (8, 28, 69) extends substantially at a right angle to the percussive direction of the percussion mechanism (8, 28, 69) and that arranged between the driving motor (9, 31, 51) and the percussion mechanism (8, 28, 69) is an axial-offset compensating element (12, 33, 53) which operates parallel to the percussion mechanism (8, 28, 69).

2. Power drill and/or chisel according to claim 1, characterised in that the gear mechanism (11, 29, 49) is arranged between the driving motor (9, 31, 51) and the axial-offset compensating element (12, 33, 53).

3. Power drill and/or chisel according to claim 1 or 2, characterised in that the axial-offset compensating element (33) is configured as a crowned-gear clutch.

4. Power drill and/or chisel according to claim 3, characterised in that the crankshaft (34) of the percussion mechanism (28) has external gear teeth which cooperate with the internal gear teeth (45) of a clutch shaft (46), the external gear teeth being of a crowned and curved construction and the internal gear teeth (45) having a suitable complementary shape.

5. Power drill and/or chisel according to claim 3 or 4, characterised in that a pinion (41) of the gear mechanism (29) has external gear teeth which cooperate with the drive shaft (32) of the driving motor (31) and internal gear teeth (43) which cooperate with external gear teeth (42) on the clutch shaft (46), the external gear teeth (42) being crowned and curved in construction and the internal gear teeth (43) having a suitable complementary shape.

6. Power drill and/or chisel according to claim 5 or 6, characterised in that the clutch shaft (46) is made of plastic.

7. Power drill and/or chisel according to claim 1 or 2, characterised in that the axial-offset compensating element (12) is configured as an Oldham coupling.

8. Power drill and/or chisel according to claim 7, characterised in that the crankshaft (14) and a pinion (21) of the gear mechanism (11) in each case communicate with a hub (22, 24), the hubs (22, 24) having slots into which mutually offset cams of a spacing disk (23) protrude.

9. Power drill and/or chisel according to claim 1 or 2, characterised in that the axial-offset compensating element (53) is configured as a parallel crank coupling.

10. Power drill and/or chisel according to claim 9, characterised in that a rotatable pinion (61) belonging to the gear mechanism (49) and disposed fixedly on the housing communicates permanently with a disk (62) and the crankshaft (54) communicates permanently with a bearing disk (64), the bearing disks (62, 64) being connected via linkages (65, 66) to a spacing disk arranged between the two bearing disks (62, 64).

## Revendications

1. Outil de forage et/ou de burinage comprenant un carter (13, 30, 50), un mécanisme de percussion (8, 28, 69) avec un piston excitateur (15, 35, 55) et au moins un vilebrequin d'un seul tenant (14, 34, 54), un moteur d'entraînement (9, 31, 51) solidaire du carter et muni d'un arbre d'entraînement (10, 32, 52) et d'une transmission (11, 29, 49) disposée entre le mécanisme de percussion (8, 28, 69) et le moteur d'entraînement (9, 31, 52), le mécanisme de percussion (8, 28, 69) étant disposé avec la possibilité de se déplacer par rapport au carter (13, 30, 50) parallèlement au sens de percussion du mécanisme de percussion (8, 28, 69) en prenant appui sur des éléments amortisseurs, caractérisé en ce que l'axe de rotation du vilebrequin (14, 34, 54) du mécanisme de percussion (8, 28, 69) est sensiblement perpendiculaire au sens de percussion du mécanisme de percussion (8, 28, 69), et en ce qu'un élément compensateur de déport axial (12, 33, 53) agissant parallèlement au sens de percussion du mécanisme de percussion (8, 28, 69) est disposé entre le moteur d'entraînement (9, 31, 51) et le mécanisme de percussion (8, 28, 69).

2. Outil de forage et/ou de burinage selon la revendication 1, caractérisé en ce que la transmission (11, 29, 49) est disposée entre le moteur d'entraînement (9, 31, 51) et l'élément compensateur de déport axial (12, 33, 53).

3. Outil de forage et/ou de burinage selon la revendication 1 ou 2, caractérisé en ce que l'élément compensateur de déport axial (33) est conformé en embrayage à denture sphéroïde.

4. Outil de forage et/ou de burinage selon la revendication 3, caractérisé en ce que le vilebrequin (34) du mécanisme de percussion (28) comporte une denture extérieure qui coopère avec une denture intérieure (45) d'un arbre d'embrayage (46), les dents de la denture extérieure étant bombées ou arquées et les dents de la denture intérieure (45) présentant une forme antagoniste correspondante.

5. Outil de forage et/ou de burinage selon la revendication 3 ou 4, caractérisé en ce qu'un pignon (41) de la transmission (29) comporte une denture extérieure coopérant avec l'arbre d'entraînement (32) du moteur d'entraînement (31) et une denture intérieure (43) coopérant avec une denture extérieure (42) du vilebrequin (46), les dents de la denture extérieure (42) étant bombées ou arquées et les dents de la denture intérieure (43) présentant une forme antagoniste correspondante.

6. Outil de forage et/ou de burinage selon la revendication 5 ou 6, caractérisé en ce que l'arbre d'embrayage (46) est réalisé en matière plastique.

7. Outil de forage et/ou de burinage selon la revendication 1 ou 2, caractérisé en ce que l'élément compensateur de déport axial (12) est conformé en joint d'Oldham.

8. Outil de forage et/ou de burinage selon la revendication 7, caractérisé en ce que le vilebrequin (14) et un pignon (21) de la transmission (11) sont chacun reliés à un moyeu (22, 24), les moyeux (22, 24) étant pourvus de fentes dans lesquelles s'engagent des ergots en décalage mutuel d'un disque intermédiaire (23).

9. Outil de forage et/ou de burinage selon la revendication 1 ou 2, caractérisé en ce que l'élément compensateur de déport axial (53) est conformé en accouplement à manivelles parallèles.

10. Outil de forage et/ou de burinage selon la revendication 9, caractérisé en ce qu'un pignon tournant (61) de la transmission (49) solidarisé au carter est solidarisé à un disque (62) et le vilebrequin (54) l'est à un disque d'appui (64), les disques d'appui (62, 64) étant reliés par des bras oscillants (65, 66) à un disque intermédiaire disposé entre deux disques d'appui (62, 64).
